# EUROPEAN PATENT SPECIFICATION

(11) **EP 3 208 742 B1**
(45) Date of publication and mention of the grant of the patent: **30.03.2022**
(21) Application number: 17155452.0
(22) Date of filing: 09.02.2017
(51) Int. Cl.: G06K 9/00, G06K 9/03

(54) **METHOD AND APPARATUS FOR DETECTING PRESSURE**
VERFAHREN UND VORRICHTUNG ZUR ERKENNUNG VON DRUCK
PROCÉDÉ ET APPAREIL DE DÉTECTION DE PRESSION

(30) Priority: 17.02.2016 CN 201610088291
(43) Date of publication of application: 23.08.2017
(73) Proprietor: Beijing Xiaomi Mobile Software Co., Ltd., Beijing 100085 (CN)
(72) Inventor: YANG, Kun, Beijing 100085 (CN); JIANG, Zhongsheng, Beijing 100085 (CN); JI, Chuanshun, Beijing 100085 (CN)
(74) Representative: Steinbauer, Florian

(56) References cited:
- EP-A1- 2 733 636
- EP-A2- 0 372 762
- US-A1- 2001 005 221
- US-A1- 2009 219 154
- US-A1- 2011 090 047
- Ashbaugh David: "Chapter V: Poroscopy and Edgeoscopy" In: "Quantitative-Qualitative Friction Ridge Analysis: An Introduction to Basic and Advanced Ridgeology", 1 January 1999 (1999-01-01), CRC Press, New York, XP055784620, pages 157-171,

## Description

### TECHNICAL FIELD

The present invention relates to a method for detecting a pressure on a fingerprint recognition sensor of an apparatus and to an apparatus for detecting a pressure on a fingerprint recognition sensor.

### BACKGROUND

Terminal devices such as mobile phones and tablet computers are electronic devices commonly used in daily lives.

In order to detect a pressure on a terminal device, in the related art, a specialized pressure sensing module is provided in the terminal device to detect a touch pressure applied on the pressure sensing module. Generally, the pressure sensing module may be divided into a resistor type and a capacitor type.

However, in the related art, the detection of pressure has to be implemented by providing a specialized pressure sensing module in the terminal device, resulting in a large volume and cumbersome terminal device and a high cost.

EP 0 372 762 A2 discloses a system and method for recognizing fingerprints using determination of minutia. Several images of the fingerprint are recorded until a certain threshold value of a pressure is reached. US 2009/0219154 A1 also discloses a system and method for recognizing fingerprints using determination of minutia. Several images of the fingerprint are recorded.

### SUMMARY

The invention is set out in the appended set of claims. Provided are a method for detecting a pressure on a fingerprint recognition sensor of an apparatus, an apparatus for detecting a pressure on a fingerprint recognition sensor, a computer program and a computer-readable storage device according to the independent claims; dependent claims relate to preferred embodiments.

The method for detecting a pressure includes:
successively acquiring a number n of frames of fingerprint images through a fingerprint recognition sensor, where n≥2 and n is an integer;
recognizing sweat pores respectively from each frame of fingerprint image;
acquiring a feature of the sweat pores respectively in each frame of fingerprint image; and
determining a change trend of a pressure applied on the fingerprint recognition sensor according to a change trend of the feature of the sweat pores in the n frames of fingerprint images.

The feature of the sweat pores includes a number of the sweat pores, and
determining a change trend of a pressure applied on the fingerprint recognition sensor according to a change trend of the feature of the sweat pores in the n frames of fingerprint images includes optionally:
if the number of the sweat pores in each of the n frames of fingerprint images gradually increases as the change trend, determining that the pressure applied on the fingerprint recognition sensor gradually increases as the change trend; or,
if the number of the sweat pores in each of the n frames of fingerprint images gradually decreases as the change trend, determining that the pressure applied on the fingerprint recognition sensor gradually decreases as the change trend.

Optionally, acquiring a feature of the sweat pores respectively in each frame of fingerprint image includes:
acquiring a number of the sweat pores in a central region of each frame of fingerprint image.

The feature of the sweat pores includes a size of a target sweat pore, and
determining a change trend of a pressure applied on the fingerprint recognition sensor according to a change trend of the feature of the sweat pores in the n frames of fingerprint images includes:
if the size of the target sweat pore in each of the n frames of fingerprint images gradually increases as the change trend, determining that the pressure applied on the fingerprint recognition sensor gradually increases as the change trend; or,
if the size of the target sweat pore in each of the n frames of fingerprint images gradually decreases as the change trend, determining that the pressure applied on the fingerprint recognition sensor gradually decreases as the change trend.

Optionally, acquiring a feature of the sweat pores respectively in each frame of fingerprint image includes:
for each frame of fingerprint image, selecting at least one target sweat pore from the sweat pores contained in the fingerprint image; and acquiring a size of the target sweat pore.

Optionally, recognizing sweat pores respectively from each frame of fingerprint image includes:
for each frame of fingerprint image, recognizing an image element which satisfies a preset condition of a pixel feature in the fingerprint image as a sweat pore;
wherein the preset condition includes a grey-scale level being larger than a preset grey-scale threshold and a size being smaller than a preset size threshold.

The apparatus for detecting a pressure includes:
an image acquiring module configured to successively acquire a number n of frames of fingerprint images through a fingerprint recognition sensor, where n≥2 and n is an integer;
a sweat-pore recognizing module configured to recognize sweat pores respectively from each frame of fingerprint image;
a feature acquiring module configured to acquire a feature of the sweat pores respectively in each frame of fingerprint image; and
a pressure determining module configured to determine a change trend of a pressure applied on the fingerprint recognition sensor according to a change trend of the feature of the sweat pores in the n frames of fingerprint images.

The feature of the sweat pores includes a number of the sweat pores, and
the pressure determining module is optionally configured to:
if the number of the sweat pores in each of the n frames of fingerprint images gradually increases as the change trend, determine that the pressure applied on the fingerprint recognition sensor gradually increases as the change trend; or,
if the number of the sweat pores in each of the n frames of fingerprint images gradually decreases as the change trend, determine that the pressure applied on the fingerprint recognition sensor gradually decreases as the change trend.

Optionally, the feature acquiring module is configured to acquire a number of the sweat pores in a central region of each frame of fingerprint image.

The feature of the sweat pores includes a size of a target sweat pore, and
the pressure determining module is configured to:
if the size of the target sweat pore in each of the n frames of fingerprint images gradually increases as the change trend, determine that the pressure applied on the fingerprint recognition sensor gradually increases as the change trend; or,
if the size of the target sweat pore in each of the n frames of fingerprint images gradually decreases as the change trend, determine that the pressure applied on the fingerprint recognition sensor gradually decreases as the change trend.

Optionally, the feature acquiring module is configured to, for each frame of fingerprint image, select at least one target sweat pore from the sweat pores contained in the fingerprint image; and acquire a size of the target sweat pore.

Optionally, the sweat-pore recognizing module is configured to, for each frame of fingerprint image, recognize an image element which satisfies a preset condition of a pixel feature in the fingerprint image as a sweat pore;
wherein the preset condition includes a grey-scale level being larger than a preset grey-scale threshold and a size being smaller than a preset size threshold.

Optionally, an apparatus for detecting a pressure includes:
a processor; and
a memory for storing instructions executable by the processor;
wherein the processor is configured to perform a method according to the invention.

The computer program, when being executed on a processor of an apparatus for detecting a pressure, performs the method according to the method for detecting a pressure, and the computer-readable storage medium has stored thereon such a computer program.

The technical solution according to embodiments of the present invention may have the following beneficial effects.

Accordingly, a feature of the sweat pores in the fingerprint images is acquired, and the change trend of the pressure applied on the fingerprint recognition sensor is determined according to the change trend of the feature of the sweat pores in the frames of fingerprint images. Therefore, it can solve the problem in the related art that the detection of pressure has to be implemented by providing a specialized pressure sensing module in the terminal device which results in a large volume and cumbersome terminal device and a high cost. It can eliminate the need for providing a pressure sensing module and allows a lightweight design of the terminal device and a low cost.

It is to be understood that both the foregoing general description and the following detailed description are exemplary only and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram illustrating an exemplary fingerprint image;
Fig. 2 is a flow chart illustrating a method for detecting a pressure according to the invention;
Fig. 3 is a flow chart illustrating a method for detecting a pressure according to another exemplary embodiment;
Fig. 4 is a flow chart illustrating a method for detecting a pressure according to the invention;
Fig. 5 is a block diagram illustrating an apparatus for detecting a pressure according to the invention; and
Fig. 6 is a block diagram illustrating an apparatus according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

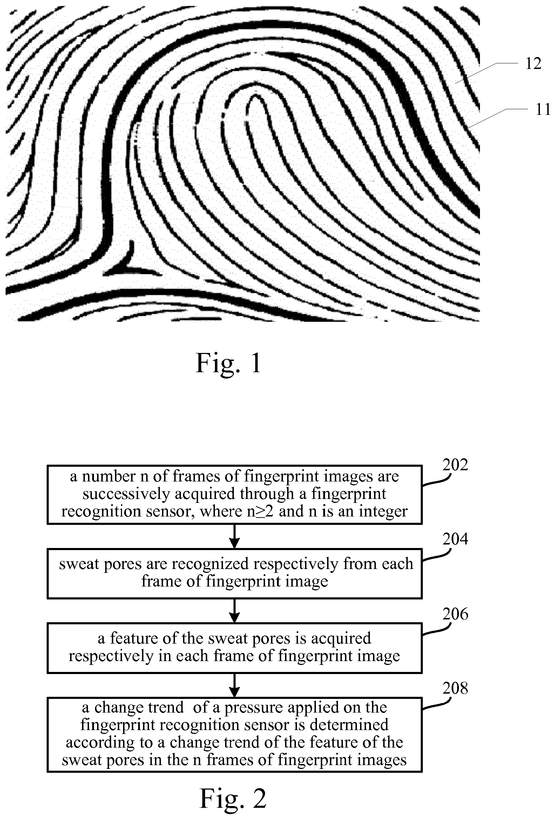

A terminal device such as a mobile phone or a tablet computer is generally equipped with a fingerprint recognition sensor, to implement a fingerprint recognition function. The fingerprint identifying sensor may include an optical fingerprint recognition sensor, a capacitive fingerprint recognition sensor, an ultrasonic fingerprint sensor or other types. No matter which type of fingerprint sensor, the principle thereof is basically the same, that is, to obtain a fingerprint image by scanning rugged print lines on a surface of a finger. Fig. 1 is a schematic diagram illustrating an exemplary fingerprint image. As shown in Fig. 1, the fingerprint image records fingerprint ridgelines 11 (represented by black lines in the figure) and fingerprint valley lines 12 (represented by white regions between the black lines in the figure). To match a fingerprint, detailed features of the fingerprint are recognized from the fingerprint image and compared to obtain a fingerprint matching result. The detailed features of the fingerprint may include end points, branch points, joint points and break points of the ridgelines.

The term "fingerprint" used herein generally refers to, but not limited to print lines of a finger of a user, and may also refer to print lines of other body portions of the user, such as a palm.

In the technical solution provided by the present invention, a touch pressure may be detected according to a fingerprint image acquired by the fingerprint recognition sensor. The technical solution provided by the present invention will be introduced and illustrated with reference to some embodiments below.

Fig. 2 is a flow chart illustrating a method for detecting a pressure according to an embodiment. The method for detecting a pressure may be applied in a terminal device equipped with a fingerprint recognition sensor. For example, the terminal device may be a mobile phone, a tablet computer, a wearable device or the like. The method for detecting a pressure may include the following steps.

At step 202, a number n of frames of fingerprint images are successively acquired through a fingerprint recognition sensor, where n≥2 and n is an integer.

At step 204, sweat pores are recognized respectively from each frame of fingerprint image.

At step 206, a feature of the sweat pores is acquired respectively in each frame of fingerprint image.

At step 208, a change trend of a pressure applied on the fingerprint recognition sensor is determined according to a change trend of the feature of the sweat pores in the n frames of fingerprint images.

Accordingly, in the method for detecting a pressure provided by the present embodiment, a feature of the sweat pores in the fingerprint images is acquired, and the change trend of the pressure applied on the fingerprint recognition sensor is determined according to the change trend of the feature of the sweat pores in the frames of fingerprint images. Therefore, it can solve the problem in the related art that the detection of pressure has to be implemented by providing a specialized pressure sensing module in the terminal device which results in a large volume and cumbersome terminal device and a high cost. It can eliminate the need for providing a pressure sensing module and allows a more lightweight design of the terminal device and a lower cost.

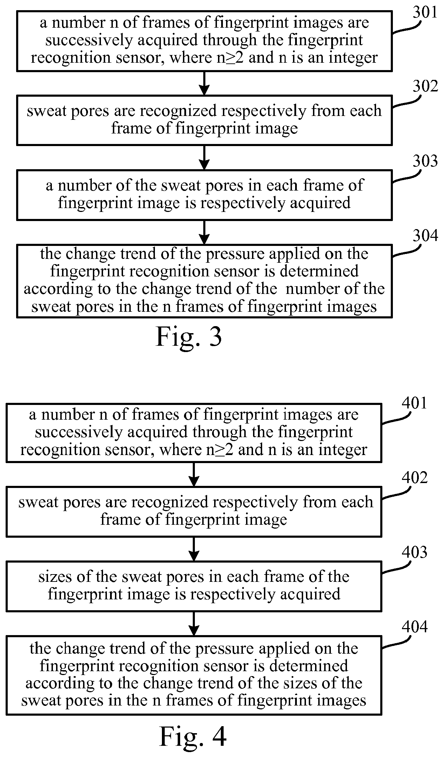

Fig. 3 is a flow chart illustrating a method for detecting a pressure according to another exemplary embodiment. The method for detecting a pressure may be applied in a terminal device equipped with a fingerprint recognition sensor. For example, the terminal device may be a mobile phone, a tablet computer, a wearable device or the like. The method for detecting a pressure may include the following steps.

At step 301, a number n of frames of fingerprint images are successively acquired through the fingerprint recognition sensor, where n≥2 and n is an integer.

The terminal device may successively acquire a number n of frames of fingerprint images through the fingerprint recognition sensor. A skin surface of a body portion such as a finger may be distributed with numerous sweat pores which are randomly arranged on the skin surface. Therefore, the fingerprint image records the sweat pores as well as the print lines on the skin surface. A sweat pore is an opening of a sweat gland at a skin surface.

At step 302, sweat pores are recognized respectively from each frame of fingerprint image.

The terminal device may recognize sweat pores respectively from each frame of fingerprint image. The fingerprint image may be presented as a grey scale image. The grey scale is in inverse proportion to a distance between the skin surface and the fingerprint recognition sensor. That is, the higher a grey-scale level of a part in the fingerprint image is, the smaller the distance between the skin surface corresponding to the part and the fingerprint recognition sensor is. On the contrary, the lower a grey-scale level of a part in the fingerprint image is, the larger the distance between the skin surface corresponding to the part and the fingerprint recognition sensor is.

At step 303, a number of the sweat pores in each frame of fingerprint image is respectively acquired.

The terminal device may respectively acquire a number of the sweat pores in each frame of fingerprint image. In the embodiment, the change trend of the touch pressure may be detected according to the change trend of the number of sweat pores in the frames of fingerprint images. With the touch pressure increases, the concave parts (the valley lines) of the skin surface gradually approach the fingerprint recognition sensor, and it may become possible for the sweat pores at the concave parts to be captured and recorded in the fingerprint image. Therefore, with the touch pressure increases, the number of the sweat pores recorded in the fingerprint image will gradually increase. On the contrary, with the touch pressure decreases, the number of the sweat pores recorded in the fingerprint image will gradually decrease.

Optionally, the terminal device may respectively acquire a number of the sweat pores at a central region of each frame of fingerprint image. Since the image signals acquired by the fingerprint recognition sensor at the central region may be clearer than at the periphery region. In this way, by counting the number of the sweat pores at the central region of the fingerprint image, it can improve the accuracy of the counting result. In addition, in the present embodiment, the size and the shape of the central region are not limited and may be set in advance depending on practical requirements.

At step 304, the change trend of the pressure applied on the fingerprint recognition sensor is determined according to the change trend of the number of the sweat pores in the n frames of fingerprint images.

The terminal device may determine the change trend of the pressure applied on the fingerprint recognition sensor according to the change trend of the number of the sweat pores in the n frames of fingerprint images. If the number of the sweat pores in each of the n frames of fingerprint images gradually increases as the change trend, the terminal device may determine that the pressure applied on the fingerprint recognition sensor gradually increases as the change trend; otherwise, if the number of the sweat pores in each of the n frames of fingerprint images gradually decreases as the change trend, the terminal device may determine that the pressure applied on the fingerprint recognition sensor gradually decreases as the change trend.

The terminal device may perform control operations according to the change trend of the pressure. For example, the terminal device may adjust the volume of the sound or brightness of the screen according to the change trend of the pressure. For example, if the pressure increases gradually, the volume of the sound is controlled to gradually increase; otherwise, if the pressure decreases gradually, the volume of the sound is controlled to gradually decrease.

Accordingly, in the method for detecting a pressure provided by the embodiment, a feature of the sweat pores in the fingerprint images is acquired, and the change trend of the pressure applied on the fingerprint recognition sensor is determined according to the change trend of the feature of the sweat pores in the frames of fingerprint images. Therefore, it can solve the problem in the related art that the detection of pressure has to be implemented by providing a specialized pressure sensing module in the terminal device which results in a large volume and cumbersome terminal device and a high cost. It can eliminate the need for providing a pressure sensing module and allows a more lightweight design of the terminal device and a lower cost.

In addition, in the method for detecting a pressure provided by the embodiment, the number of the sweat pores in the fingerprint images is acquired, and the change trend of the pressure applied on the fingerprint recognition sensor is determined according to the change trend of the number of the sweat pores in the frames of fingerprint images. Thereby, it can detect the change of the magnitude of the touch pressure based on the change of the number of the sweat pores.

Fig. 4 is a flow chart illustrating the method for detecting a pressure according to another embodiment. The method for detecting a pressure may be applied in a terminal device equipped with a fingerprint recognition sensor. For example, the terminal device may be a mobile phone, a tablet computer, a wearable device or the like. The method for detecting a pressure may include the following steps.

At step 401, a number n of frames of fingerprint images are successively acquired through the fingerprint recognition sensor, where n≥2 and n is an integer.

At step 402, sweat pores are recognized respectively from each frame of fingerprint image.

The above steps 401 and 402 are the same as the steps 301 and 302 in the embodiment as shown in Fig. 3, therefore, the description thereof may refer to the above description of the steps 301 and 302, which will not be repeated herein.

At step 403, sizes of the sweat pores in each frame of the fingerprint image is respectively acquired.

The terminal device respectively acquires the sizes of the sweat pores in each frame of the fingerprint image. The sizes of the sweat pores refer to areas of the sweat pores. In the present embodiment, the change trend of the touch pressure is detected according to the change trend of the sizes of the sweat pores in the frames of fingerprint images. With the touch pressure increasing, the sweat pores come into contact with the fingerprint recognition sensor and a pressure is applied on the sweat pores. Therefore, the sizes of the sweat pores recorded in the fingerprint images will gradually decrease. On the other hand, with the touch pressure decreases, the sizes of the sweat pores recorded in the fingerprint images will gradually decrease. In addition, since a pressure is applied on a sweat pore, sweat liquid is permeated out of the sweat pore, leaving a white dot on the fingerprint image at a central location of the respective sweat pore. Therefore, in addition to the sizes of the sweat pores, the change trend of the pressure may be detected by determining whether sweat liquid is permeated out of the sweat pores.

Optionally, for each frame of fingerprint image, the terminal device may select at least one target sweat pore from the sweat pores contained in the fingerprint image and acquire the size of the target sweat pore. The target sweat pore may be the sweat pore with a relatively high definition in the fingerprint image. In this way, the change trend of the size of the sweat pore can be detected more clearly and more accurately.

At step 404, the change trend of the pressure applied on the fingerprint recognition sensor is determined according to the change trend of the sizes of the sweat pores in the n frames of fingerprint images.

The terminal device determines the change trend of the pressure applied on the fingerprint recognition sensor according to the change trend of the sizes of the sweat pores in the n frames of fingerprint images. If the sizes of the sweat pores in each of the n frames of fingerprint images gradually increase as the change trend, the terminal device may determine that the pressure applied on the fingerprint recognition sensor gradually increases as the change trend; otherwise, if the sizes of the sweat pores in each of the n frames of fingerprint images gradually decrease as the change trend, the terminal device may determine that the pressure applied on the fingerprint recognition sensor gradually decreases as the change trend.

Accordingly, in the method for detecting a pressure provided by the embodiment, a feature of the sweat pores in the fingerprint images is acquired, and the change trend of the pressure applied on the fingerprint recognition sensor is determined according to the change trend of the feature of the sweat pores in the frames of fingerprint images. Therefore, it can solve the problem in the related art that the detection of pressure has to be implemented by providing a specialized pressure sensing module in the terminal device which results in a large volume and cumbersome terminal device and a high cost. It can eliminate the need for providing a pressure sensing module and allows a light design of the terminal device and a low cost.

In addition, in the method for detecting a pressure provided by the embodiment, the sizes of the sweat pores in the fingerprint images are acquired, and the change trend of the pressure applied on the fingerprint recognition sensor is determined according to the change trend of the sizes of the sweat pores in the frames of fingerprint images. Thereby, it can detect the change of the magnitude of the touch pressure based on the change of the sizes of the sweat pores.

The above embodiments as shown in Figs. 3 and 4 provide two methods for detecting a pressure respectively according to a feature of the sweat pores, in which one is based on the change of the number of the sweat pores, and the other is based on the change of the sizes of the sweat pores. In practical application, the pressure may be detected by using only one of the methods, or by using combination of the two methods.

It should be further noted that, after the terminal device acquires a feature of the sweat pores, the terminal device acquires a level of pressure corresponding to the feature of the sweat pores according to a predetermined corresponding relationship. The predetermined corresponding relationship includes at least one group of corresponding relationships between the features of the sweat pores and the levels of pressure. For example, if the feature of the sweat pores is the number of the sweat pores, after the terminal device acquires the number of the sweat pores contained in a fingerprint image, the terminal device may search the predetermined corresponding relationship to determine the level of the pressure corresponding to the number of the sweat pores. Thereby, the levels of the touch pressure can be quantified and the magnitude of the pressure can be evaluated. In practical application, the above predetermined corresponding relationship may be set in advance based on experimental data and stored in the terminal device, or may also be set by the user.

The following apparatus, which may be configured to perform the above method embodiments of the present invention. For the details of the apparatus not described, please refer to the method embodiments of the present invention.

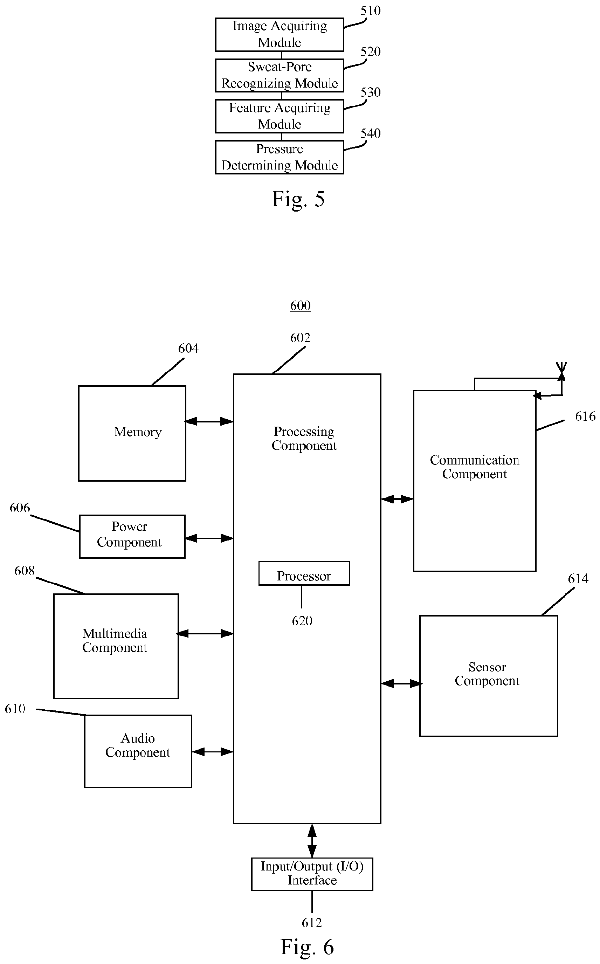

Fig. 5 is a block diagram illustrating an apparatus for detecting a pressure according to an embodiment. The apparatus may be implemented in software, hardware or combination of both, to form a part or the whole of an electronic device. The apparatus for detecting a pressure includes: an image acquiring module 510, a sweat-pore recognizing module 520, a feature acquiring module 530 and a pressure determining module 540.

The image acquiring module 510 is configured to successively acquire a number n of frames of fingerprint images through a fingerprint recognition sensor, where n≥2 and n is an integer.

The sweat-pore recognizing module 520 is configured to recognize sweat pores respectively from each frame of fingerprint image.

The feature acquiring module 530 is configured to acquire a feature of the sweat pores respectively in each frame of fingerprint image.

The pressure determining module 540 is configured to determine a change trend of a pressure applied on the fingerprint recognition sensor according to a change trend of the feature of the sweat pores in the n frames of fingerprint images.

Accordingly, in the apparatus for detecting a pressure provided by the present invention, a feature of the sweat pores in the fingerprint images is acquired, and the change trend of the pressure applied on the fingerprint recognition sensor is determined according to the change trend of the feature of the sweat pores in the frames of fingerprint images. Therefore, it can solve the problem in the related art that the detection of pressure has to be implemented by providing a specialized pressure sensing module in the terminal device, resulting in a large volume and cumbersome terminal device and a high cost. It can eliminate the need for providing a pressure sensing module and allows a lightweight design of the terminal device and a low cost.

The feature of the sweat pores includes a number of the sweat pores.

Then, the pressure determining module 540 is optionally configured to: if the number of the sweat pores in each of the n frames of fingerprint images gradually increases as the change trend, determine that the pressure applied on the fingerprint recognition sensor gradually increases as the change trend; or, if the number of the sweat pores in each of the n frames of fingerprint images gradually decreases as the change trend, determine that the pressure applied on the fingerprint recognition sensor gradually decreases as the change trend.

Optionally, the feature acquiring module 530 is configured to acquire a number of the sweat pores in a central region of each frame of fingerprint image.

The feature of the sweat pores includes a size of a target sweat pore.

Then, the pressure determining module 540 is configured to: if the size of the target sweat pore in each of the n frames of fingerprint images gradually increases as the change trend, determine that the pressure applied on the fingerprint recognition sensor gradually increases as the change trend; or, if the size of the target sweat pore in each of the n frames of fingerprint images gradually decreases as the change trend, determine that the pressure applied on the fingerprint recognition sensor gradually decreases as the change trend.

Optionally, the feature acquiring module 530 is configured to, for each frame of fingerprint image, select at least one target sweat pore from the sweat pores contained in the fingerprint image; and acquire a size of the target sweat pore.

In another optional embodiment based on the embodiment as shown in Fig. 5, the sweat-pore recognizing module 520 is configured to, for each frame of fingerprint image, recognize an image element which satisfies a preset condition of a pixel feature in the fingerprint image as a sweat pore. Here, the preset condition includes a grey-scale level being larger than a preset grey-scale threshold and a size being smaller than a preset size threshold.

It should be noted that, the apparatus provided by the above embodiments is only illustrated as the functional modules as divided above to achieve its functions. In practical application, the above functions may be assigned to different functional modules as actually desired, that is, the internal structure of the apparatus may be divided into different functional modules to accomplish all or a part of the functions described above.

With respect to the apparatuses in the above embodiments, the specific manners for performing operations for individual modules therein have been described in detail in the embodiments regarding the relevant methods, which will not be elaborated herein.

An embodiment of the present invention also provides an apparatus for detecting a pressure, which may perform the method for detecting a pressure provided by the present invention. The apparatus includes: a processor; and a memory for storing instructions executable by the processor. In the embodiment, the processor is configured to perform:
successively acquiring a number n of frames of fingerprint images through a fingerprint recognition sensor, where n≥2 and n is an integer;
recognizing sweat pores respectively from each frame of fingerprint image;
acquiring a feature of the sweat pores respectively in each frame of fingerprint image; and
determining a change trend of a pressure applied on the fingerprint recognition sensor according to a change trend of the feature of the sweat pores in the n frames of fingerprint images.

The feature of the sweat pores includes a number of the sweat pores.

Correspondingly, processor is optionally configured to perform:
if the number of the sweat pores in each of the n frames of fingerprint images gradually increases as the change trend, determining that the pressure applied on the fingerprint recognition sensor gradually increases as the change trend; or,
if the number of the sweat pores in each of the n frames of fingerprint images gradually decreases as the change trend, determining that the pressure applied on the fingerprint recognition sensor gradually decreases as the change trend.

Optionally, processor is configured to perform:
acquiring a number of the sweat pores in a central region of each frame of fingerprint image.

The feature of the sweat pores includes a size of a target sweat pore.

Correspondingly, processor is configured to perform:
if the size of the target sweat pore in each of the n frames of fingerprint images gradually increases as the change trend, determining that the pressure applied on the fingerprint recognition sensor gradually increases as the change trend; or,
if the size of the target sweat pore in each of the n frames of fingerprint images gradually decreases as the change trend, determining that the pressure applied on the fingerprint recognition sensor gradually decreases as the change trend.

Optionally, processor is configured to perform:
for each frame of fingerprint image, selecting at least one target sweat pore from the sweat pores contained in the fingerprint image; and acquiring a size of the target sweat pore.

Optionally, processor is configured to perform:
for each frame of fingerprint image, recognizing an image element which satisfies a preset condition of a pixel feature in the fingerprint image as a sweat pore;
wherein the preset condition includes a grey-scale level being larger than a preset grey-scale threshold and a size being smaller than a preset size threshold.

Fig. 6 is a block diagram illustrating an apparatus 600 according to an exemplary embodiment. For example, the apparatus 600 may be a mobile phone, a computer, a digital broadcast terminal, a messaging device, a gaming console, a tablet, a medical device, exercise equipment, a personal digital assistant, and the like.

Referring to Fig. 6, the apparatus 600 can include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 can include one or more processors 620 to execute instructions to perform all or part of the steps in the above described methods. Moreover, the processing component 602 can include one or more modules which facilitate the interaction between the processing component 602 and other components. For instance, the processing component 602 can include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, etc. The memory 604 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 can include a power management system, one or more power sources, and any other components associated with the generation, management, and distribution of power in the apparatus 600.

The multimedia component 608 includes a screen providing an output interface between the apparatus 600 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 608 includes a front camera and/or a rear camera. The front camera and/or the rear camera can receive an external multimedia datum while the apparatus 600 is in an operation mode, such as a photographing mode or a video mode. Each of the front camera and the rear camera can be a fixed optical lens system or have focus and optical zoom capability.

The audio component 610 is configured to output and/or input audio signals. For example, the audio component 610 includes a microphone ("MIC") configured to receive an external audio signal when the apparatus 600 is in an operation mode, such as a call mode, a recording mode, and a voice recognition mode. The received audio signal can be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons can include, but are not limited to, a home button, a volume button, a starting button, and a locking button.

The sensor component 614 includes one or more sensors to provide status assessments of various aspects of the apparatus 600. The sensor component 614 at least includes a fingerprint recognition sensor, such as an optical fingerprint recognition sensor, a capacitive fingerprint recognition sensor, an ultrasonic fingerprint sensor or other types. Optionally, the sensor component 614 can detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 can include a proximity sensor configured to detect the presence of nearby objects without any physical contact. The sensor component 614 can also include a light sensor, such as a CMOS or CCD image sensor, for use in imaging applications. In some embodiments, the sensor component 614 can also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2Q or 3G or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

The apparatus 600 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

There is also provided a non-transitory computer-readable storage medium including instructions, such as included in the memory 604, executable by the processor 620 in the apparatus 600, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium are executed by the processor of the apparatus 600, the apparatus 600 is enabled to perform the method described above.

It should be understood that, the term "a plurality of' used herein refers to two or more than two. The term "and/or" is used to describe a correlation between associated objects. It means three kinds of correlations. For example, A and/or B may mean that: only A exists; both A and B exist; and only B exists. The symbol "/" generally means the former object and the latter object have an "or" relationship.

## Claims

1. A method for detecting a pressure on a fingerprint recognition sensor of an apparatus (600), **characterized in that** the method comprises:
successively acquiring (202, 301, 401) a number n of frames of fingerprint images through a fingerprint recognition sensor, where n≥2 and n is an integer;
recognizing (204, 302, 402) sweat pores respectively from each frame of fingerprint image;
acquiring (206) a feature of the sweat pores respectively in each frame of fingerprint image; and
determining (208) a change trend of a pressure applied on the fingerprint recognition sensor according to a change trend of the feature of the sweat pores in the n frames of fingerprint images, wherein the feature of the sweat pores comprises a number of the sweat pores and a size of a target sweat pore, and the change trend of the pressure applied on the fingerprint recognition sensor is caused by a change of pressing on the fingerprint recognition sensor,
the determining (208) the change trend of the pressure applied on the fingerprint recognition sensor according to a change trend of the feature of the sweat pores in the n frames of fingerprint images further comprises:
obtaining a level of pressure corresponding to the feature of the sweat pores according to a predetermined corresponding relationship, wherein the predetermined corresponding relationship is pre-stored in the apparatus, and
if the size of the target sweat pore in each of the n frames of fingerprint images gradually increases as the change trend, determining that the pressure applied on the fingerprint recognition sensor gradually increases as the change trend (404); or,
if the size of the target sweat pore in each of the n frames of fingerprint images gradually decreases as the change trend, determining that the pressure applied on the fingerprint recognition sensor gradually decreases as the change trend (404).

2. The method of claim 1, wherein the feature of the sweat pores comprises a number of the sweat pores, and
the determining (208) the change trend of the pressure applied on the fingerprint recognition sensor according to a change trend of the feature of the sweat pores in the n frames of fingerprint images comprises:
if the number of the sweat pores in each of the n frames of fingerprint images gradually increases as the change trend, determining that the pressure applied on the fingerprint recognition sensor gradually increases as the change trend (304); or,
if the number of the sweat pores in each of the n frames of fingerprint images gradually decreases as the change trend, determining that the pressure applied on the fingerprint recognition sensor gradually decreases as the change trend (304).

3. The method of claim 1 or 2, wherein acquiring (206) a feature of the sweat pores respectively in each frame of fingerprint image comprises:
acquiring (303) a number of the sweat pores in a central region of each frame of fingerprint image.

4. The method of claim 1, wherein acquiring a feature of the sweat pores respectively in each frame of fingerprint image comprises:
for each frame of fingerprint image, selecting at least one target sweat pore from the sweat pores contained in the fingerprint image; and acquiring (403) a size of the target sweat pore.

5. The method of any one of claims 1 to 4, wherein recognizing (204, 302, 402) sweat pores respectively from each frame of fingerprint image comprises:
for each frame of fingerprint image, recognizing an image element which satisfies a preset condition of a pixel feature in the fingerprint image as a sweat pore;
wherein the preset condition comprises a grey-scale level being larger than a preset grey-scale threshold and a size being smaller than a preset size threshold.

6. An apparatus for detecting a pressure on a fingerprint recognition sensor, **characterized in that** the apparatus comprises:
an image acquiring module (510) configured to successively acquire a number n of frames of fingerprint images through a fingerprint recognition sensor, where n≥2 and n is an integer;
a sweat-pore recognizing module (520) configured to recognize sweat pores respectively from each frame of fingerprint image;
a feature acquiring module (530) configured to acquire a feature of the sweat pores respectively in each frame of fingerprint image; and
a pressure determining module (540) configured to determine a change trend of a pressure applied on the fingerprint recognition sensor according to a change trend of the feature of the sweat pores in the n frames of fingerprint images, wherein the feature of the sweat pores comprises a number of the sweat pores and a size of a target sweat pore, and the change trend of the pressure applied on the fingerprint recognition sensor is caused by a change of pressing on the fingerprint recognition sensor,
the pressure determining module (540) is configured to
obtain a level of pressure corresponding to the feature of the sweat pores according to a predetermined corresponding relationship, wherein the predetermined corresponding relationship is pre-stored in the apparatus, and
if the size of the target sweat pore in each of the n frames of fingerprint images gradually increases as the change trend, determine that the pressure applied on the fingerprint recognition sensor gradually increases as the change trend; or,
if the size of the target sweat pore in each of the n frames of fingerprint images gradually decreases as the change trend, determine that the pressure applied on the fingerprint recognition sensor gradually decreases as the change trend.

7. The apparatus of claim 6, wherein the feature of the sweat pores comprises a number of the sweat pores, and
the pressure determining module (540) is configured to:
if the number of the sweat pores in each of the n frames of fingerprint images gradually increases as the change trend, determine that the pressure applied on the fingerprint recognition sensor gradually increases as the change trend; or,
if the number of the sweat pores in each of the n frames of fingerprint images gradually decreases as the change trend, determine that the pressure applied on the fingerprint recognition sensor gradually decreases as the change trend.

8. The apparatus of claim 7, wherein the feature acquiring module (530) is configured to acquire a number of the sweat pores in a central region of each frame of fingerprint image.

9. The apparatus of claim 6, wherein the feature acquiring module (530) is configured to, for each frame of fingerprint image, select at least one target sweat pore from the sweat pores contained in the fingerprint image; and acquire a size of the target sweat pore.

10. The apparatus of any one of claims 6 to 9, wherein the sweat-pore recognizing module (520) is configured to, for each frame of fingerprint image, recognize an image element which satisfies a preset condition of a pixel feature in the fingerprint image as a sweat pore;
wherein the preset condition comprises a grey-scale level being larger than a preset grey-scale threshold and a size being smaller than a preset size threshold.

11. A computer program which, when being executed on a processor (620) of an apparatus (600) for detecting a pressure, performs the method of any one of claims 1 to 5.

12. A computer-readable storage device having stored thereon a computer program according to claim 11.

## Patentansprüche

1. Verfahren zum Erfassen eines Drucks auf einen Fingerabdruckerkennungssensor einer Vorrichtung (600), **dadurch gekennzeichnet, dass** das Verfahren umfasst:
sukzessives Erfassen (202, 301, 401) einer Anzahl n von Bildern von Fingerabdruckbildern durch einen Fingerabdruckerkennungssensor, wobei n≥2 und n eine ganze Zahl ist;
Erkennen (204, 302, 402) von Schweißporen in jedem Bild des Fingerabdrucks;
Erfassen (206) eines Merkmals der Schweißporen in jedem Einzelbild des Fingerabdruckbildes; und
Bestimmen (208) eines Änderungstrends eines auf den Fingerabdruckerkennungssensor ausgeübten Drucks gemäß einem Änderungstrend des Merkmals der Schweißporen in den n Bildern von Fingerabdruckbildern, wobei das Merkmal der Schweißporen eine Anzahl der Schweißporen und eine Größe einer Zielschweißpore umfasst und der Änderungstrend des auf den Fingerabdruckerkennungssensor ausgeübten Drucks durch eine Änderung des Drückens auf den Fingerabdruckerkennungssensor verursacht wird,
wobei Bestimmen (208) der Änderungstendenz des auf den Fingerabdruckerkennungssensor ausgeübten Drucks gemäß einer Änderungstendenz des Merkmals der Schweißporen in den n Bildern von Fingerabdruckbildern ferner umfasst:
Erhalten eines Druckniveaus, das dem Merkmal der Schweißporen entspricht, gemäß einer vorbestimmten entsprechenden Beziehung, wobei die vorbestimmte entsprechende Beziehung in der Vorrichtung vorgespeichert ist, und
wenn die Größe der Zielschweißpore in jedem der n Bilder von Fingerabdruckbildern allmählich wie der Änderungstrend zunimmt, Bestimmen, dass der auf den Fingerabdruckerkennungssensor ausgeübte Druck allmählich wie der Änderungstrend zunimmt (404); oder,
wenn die Größe der Zielschweißpore in jedem der n Bilder von Fingerabdruckbildern allmählich wie der Änderungstrend abnimmt, Bestimmen, dass der auf den Fingerabdruckerkennungssensor ausgeübte Druck allmählich wie der Änderungstrend abnimmt (404).

2. Verfahren nach Anspruch 1, wobei das Merkmal der Schweißporen eine Anzahl der Schweißporen umfasst, und
wobei Bestimmen (208) der Änderungstendenz des auf den Fingerabdruckerkennungssensor ausgeübten Drucks gemäß einer Änderungstendenz des Merkmals der Schweißporen in den n Bildern von Fingerabdruckbildern umfasst:
wenn die Anzahl der Schweißporen in jedem der n Bilder von Fingerabdruckbildern allmählich mit dem Änderungstrend zunimmt, Bestimmen, dass der auf den Fingerabdruckerkennungssensor ausgeübte Druck allmählich mit dem Änderungstrend zunimmt (304); oder,
wenn die Anzahl der Schweißporen in jedem der n Bilder von Fingerabdruckbildern allmählich wie der Änderungstrend abnimmt, Bestimmen, dass der auf den Fingerabdruckerkennungssensor ausgeübte Druck allmählich wie der Änderungstrend abnimmt (304).

3. Verfahren nach Anspruch 1 oder 2, wobei das Erfassen (206) eines Merkmals der Schweißporen jeweils in jedem Bild des Fingerabdruckbildes umfasst:
Erfassen (303) einer Anzahl von Schweißporen in einem zentralen Bereich jedes Bildes eines Fingerabdrucks.

4. Verfahren nach Anspruch 1, wobei das Erfassen eines Merkmals der Schweißporen jeweils in jedem Bild des Fingerabdruckbildes umfasst:
für jedes Einzelbild des Fingerabdruckbildes, Auswählen mindestens einer Zielschweißpore aus den im Fingerabdruckbild enthaltenen Schweißporen;
und Erfassen (403) einer Größe der Zielschweißpore.

5. Verfahren nach einem der Ansprüche 1 bis 4, wobei das Erkennen (204, 302, 402) von Schweißporen jeweils aus jedem Einzelbild eines Fingerabdruckbildes umfasst:
für jedes Einzelbild eines Fingerabdruckbildes ein Bildelement, das eine voreingestellte Bedingung eines Pixelmerkmals im Fingerabdruckbild erfüllt, als eine Schweißpore zu erkennen;
wobei die voreingestellte Bedingung einen Graustufenwert umfasst, der größer als ein voreingestellter Graustufenschwellenwert ist, und eine Größe, die kleiner als ein voreingestellter Größenschwellenwert ist.

6. Vorrichtung zur Erfassung eines Drucks auf einen Fingerabdruckerkennungssensor, **dadurch gekennzeichnet, dass** die Vorrichtung umfasst:
ein Bilderfassungsmodul (510), das so konfiguriert ist, dass es nacheinander eine Anzahl n von Bildern von Fingerabdruckbildern durch einen Fingerabdruckerkennungssensor erfasst, wobei n≥2 und n eine ganze Zahl ist;
ein Schweißporenerkennungsmodul (520), das so konfiguriert ist, dass es Schweißporen aus jedem Einzelbild eines Fingerabdruckbildes erkennt;
ein Merkmalserfassungsmodul (530), das so konfiguriert ist, dass es jeweils ein Merkmal der Schweißporen in jedem Bild des Fingerabdruckbildes erfasst; und
ein Druckbestimmungsmodul (540), das konfiguriert ist, um einen Änderungstrend eines auf den Fingerabdruckerkennungssensor ausgeübten Drucks gemäß einem Änderungstrend des Merkmals der Schweißporen in den n Bildern von Fingerabdruckbildern zu bestimmen, wobei das Merkmal der Schweißporen eine Anzahl der Schweißporen und eine Größe einer Zielschweißpore umfasst und der Änderungstrend des auf den Fingerabdruckerkennungssensor ausgeübten Drucks durch eine Änderung des Drückens auf den Fingerabdruckerkennungssensor verursacht wird,
wobei das Druckbestimmungsmodul (540) so konfiguriert ist, zum
Erhalten eines Druckniveaus, das dem Merkmal der Schweißporen entspricht, gemäß einer vorbestimmten entsprechenden Beziehung, wobei die vorbestimmte entsprechende Beziehung in der Vorrichtung vorgespeichert ist, und
wenn die Größe der Zielschweißpore in jedem der n Bilder von Fingerabdruckbildern allmählich wie der Änderungstrend zunimmt, Bestimmen, dass der auf den Fingerabdruckerkennungssensor ausgeübte Druck allmählich wie der Änderungstrend zunimmt; oder,
wenn die Größe der Zielschweißpore in jedem der n Bilder von Fingerabdruckbildern allmählich wie der Änderungstrend abnimmt, Bestimmen, dass der auf den Fingerabdruckerkennungssensor ausgeübte Druck allmählich wie der Änderungstrend abnimmt.

7. Vorrichtung nach Anspruch 6, wobei das Merkmal der Schweißporen eine Anzahl der Schweißporen umfasst, und
das Druckbestimmungsmodul (540) so konfiguriert ist, zum:
wenn die Anzahl der Schweißporen in jedem der n Bilder von Fingerabdruckbildern allmählich wie der Änderungstrend zunimmt, Bestimmen, dass der auf den Fingerabdruckerkennungssensor ausgeübte Druck allmählich wie der Änderungstrend zunimmt; oder,
wenn die Anzahl der Schweißporen in jedem der n Bilder von Fingerabdruckbildern allmählich wie der Änderungstrend abnimmt, Bestimmen, dass der auf den Fingerabdruckerkennungssensor ausgeübte Druck allmählich wie der Änderungstrend abnimmt.

8. Vorrichtung nach Anspruch 7, wobei das Merkmalserfassungsmodul (530) so konfiguriert ist, dass es eine Anzahl der Schweißporen in einem zentralen Bereich jedes Bildes eines Fingerabdruckes erfasst.

9. Vorrichtung nach Anspruch 6, wobei das Merkmalserfassungsmodul (530) so konfiguriert ist, dass es für jedes Einzelbild eines Fingerabdruckbildes mindestens eine Zielschweißpore aus den im Fingerabdruckbild enthaltenen Schweißporen auswählt und eine Größe der Zielschweißpore erfasst.

10. Vorrichtung nach einem der Ansprüche 6 bis 9, wobei das SchweißporenErkennungsmodul (520) so konfiguriert ist, dass es für jedes Einzelbild eines Fingerabdruckbildes ein Bildelement, das eine voreingestellte Bedingung eines Pixelmerkmals in dem Fingerabdruckbild erfüllt, als Schweißpore erkennt;
wobei die voreingestellte Bedingung einen Graustufenwert umfasst, der größer als ein voreingestellter Graustufenschwellenwert ist, und eine Größe, die kleiner als ein voreingestellter Größenschwellenwert ist.

11. Computerprogramm, das, wenn es auf einem Prozessor (620) einer Vorrichtung (600) zum Erfassen eines Drucks ausgeführt wird, das Verfahren nach einem der Ansprüche 1 bis 5 durchführt.

12. Computerlesbares Speichergerät, auf dem ein Computerprogramm nach Anspruch 11 gespeichert ist.

## Revendications

1. Procédé pour détecter une pression sur un capteur de reconnaissance d'empreintes digitales d'un appareil (600), **caractérisé en ce que** le procédé comporte les étapes consistant à :
acquérir successivement (202, 301, 401) un nombre n de trames d'images d'empreintes digitales via un capteur de reconnaissance d'empreintes digitales, où n ≥ 2 et n est un entier ;
reconnaître (204, 302, 402) des pores de sueur respectivement à partir de chaque trame d'image d'empreinte digitale ;
acquérir (206) une caractéristique des pores de sueur respectivement dans chaque trame d'image d'empreinte digitale ; et
déterminer (208) une tendance de variation d'une pression appliquée sur le capteur de reconnaissance d'empreintes digitales d'après une tendance de variation de la caractéristique des pores de sueur dans les n trames d'images d'empreintes digitales, dans lequel la caractéristique des pores de sueur comporte un nombre des pores de sueur et une taille d'un pore de sueur cible, et la tendance de variation de la pression appliquée sur le capteur de reconnaissance d'empreintes digitales est due à une variation de pression sur le capteur de reconnaissance d'empreintes digitales,
la détermination (208) de la tendance de variation de la pression appliquée sur le capteur de reconnaissance d'empreintes digitales d'après une tendance de variation de la caractéristique des pores de sueur dans les n trames d'images d'empreintes digitales comporte en outre les étapes consistant à :
obtenir un niveau de pression correspondant à la caractéristique des pores de sueur d'après une relation correspondante prédéterminée, dans lequel la relation correspondante prédéterminée est pré-mémorisée dans l'appareil, et
si l'augmentation graduelle de la taille du pore de sueur cible dans chacune des n trames d'images d'empreintes digitales est la tendance de variation, déterminer que l'augmentation graduelle de la pression appliquée sur le capteur de reconnaissance d'empreintes digitales est la tendance de variation (404) ; ou,
si la diminution graduelle de la taille du pore de sueur cible dans chacune des n trames d'images d'empreintes digitales est la tendance de variation, déterminer que la diminution graduellement de la pression appliquée sur le capteur de reconnaissance d'empreintes digitales est la tendance de variation (404).

2. Procédé selon la revendication 1, dans lequel la caractéristique des pores de sueur comporte un nombre des pores de sueur, et
la détermination (208) de la tendance de variation de la pression appliquée sur le capteur de reconnaissance d'empreintes digitales d'après une tendance de variation de la caractéristique des pores de sueur dans les n trames d'images d'empreintes digitales comporte les étapes consistant à :
si l'augmentation graduelle du nombre des pores de sueur dans chacune des n trames d'images d'empreintes digitales est la tendance de variation, déterminer que l'augmentation graduelle de la pression appliquée sur le capteur de reconnaissance d'empreintes digitales est la tendance de variation (304) ; ou,
si la diminution graduelle du nombre des pores de sueur dans chacune des n trames d'images d'empreintes digitales est la tendance de variation, déterminer que la diminution graduelle de la pression appliquée sur le capteur de reconnaissance d'empreintes digitales est la tendance de variation (304).

3. Procédé selon la revendication 1 ou 2, dans lequel l'acquisition (206) d'une caractéristique des pores de sueur respectivement dans chaque trame d'image d'empreinte digitale comporte l'étape consistant à :
acquérir (303) un nombre des pores de sueur dans une zone centrale de chaque trame d'image d'empreinte digitale.

4. Procédé selon la revendication 1, dans lequel l'acquisition d'une caractéristique des pores de sueur respectivement dans chaque trame d'image d'empreinte digitale comporte les étapes consistant à :
pour chaque trame d'image d'empreinte digitale, sélectionner au moins un pore de sueur cible à partir des pores de sueur contenus dans l'image d'empreinte digitale ; et acquérir (403) une taille du pore de sueur cible.

5. Procédé selon l'une quelconque des revendications 1 à 4, dans lequel la reconnaissance (204, 302, 402) de pores de sueur respectivement à partir de chaque trame d'image d'empreinte digitale comporte les étapes consistant à :
pour chaque trame d'image d'empreinte digitale, reconnaître un élément d'image qui satisfait à une condition prédéfinie d'une caractéristique de pixel dans l'image d'empreinte digitale comme étant un pore de sueur ;
dans lequel la condition prédéfinie comporte un niveau d'échelle de gris étant supérieur à un seuil d'échelle de gris prédéfini et une taille étant inférieure à un seuil de taille prédéfini.

6. Appareil pour détecter une pression sur un capteur de reconnaissance d'empreintes digitales, **caractérisé en ce que** l'appareil comporte :
un module d'acquisition d'images (510) configuré pour acquérir successivement un nombre n de trames d'images d'empreintes digitales via un capteur de reconnaissance d'empreintes digitales, où n ≥ 2 et n est un entier ;
un module de reconnaissance de pores de sueur (520) configuré pour reconnaître des pores de sueur respectivement à partir de chaque trame d'image d'empreinte digitale ;
un module d'acquisition de caractéristique (530) configuré pour acquérir une caractéristique des pores de sueur respectivement dans chaque trame d'image d'empreinte digitale ; et
un module de détermination de pression (540) configuré pour déterminer une tendance de variation d'une pression appliquée sur le capteur de reconnaissance d'empreintes digitales d'après une tendance de variation de la caractéristique des pores de sueur dans les n trames d'images d'empreintes digitales, dans lequel la caractéristique des pores de sueur comporte un nombre des pores de sueur et une taille d'un pore de sueur cible, et la tendance de variation de la pression appliquée sur le capteur de reconnaissance d'empreintes digitales est due à une variation de pression sur le capteur de reconnaissance d'empreintes digitales,
le module de détermination de pression (540) est en outre configuré pour :
obtenir un niveau de pression correspondant à la caractéristique des pores de sueur d'après une relation correspondante prédéterminée, dans lequel la relation correspondante prédéterminée est pré-mémorisée dans l'appareil, et
si l'augmentation graduelle de la taille du pore de sueur cible dans chacune des n trames d'images d'empreintes digitales est la tendance de variation, déterminer que l'augmentation graduelle de la pression appliquée sur le capteur de reconnaissance d'empreintes digitales est la tendance de variation ; ou,
si la diminution graduelle de la taille du pore de sueur cible dans chacune des n trames d'images d'empreintes digitales est la tendance de variation, déterminer que la diminution graduelle de la pression appliquée sur le capteur de reconnaissance d'empreintes digitales est la tendance de variation.

7. Appareil selon la revendication 6, dans lequel la caractéristique des pores de sueur comporte un nombre des pores de sueur, et
le module de détermination de pression (540) est configuré pour :
si l'augmentation graduelle du nombre des pores de sueur dans chacune des n trames d'images d'empreintes digitales est la tendance de variation, déterminer que l'augmentation graduelle de la pression appliquée sur le capteur de reconnaissance d'empreintes digitales est la tendance de variation ; ou,
si la diminution graduelle du nombre des pores de sueur dans chacune des n trames d'images d'empreintes digitales est la tendance de variation, déterminer que la diminution graduelle de la pression appliquée sur le capteur de reconnaissance d'empreintes digitales est la tendance de variation.

8. Appareil selon la revendication 7, dans lequel le module d'acquisition de caractéristique (530) est configuré pour acquérir un nombre des pores de sueur dans une zone centrale de chaque trame d'image d'empreinte digitale.

9. Appareil selon la revendication 6, dans lequel le module d'acquisition de caractéristique (530) est configuré pour, pour chaque trame d'image d'empreinte digitale, sélectionner au moins un pore de sueur cible à partir des pores de sueur contenus dans l'image d'empreinte digitale ; et acquérir une taille du pore de sueur cible.

10. Appareil selon l'une quelconque des revendications 6 à 9, dans lequel le module de reconnaissance de pores de sueur (520) est configuré pour, pour chaque trame d'image d'empreinte digitale, reconnaître un élément d'image qui satisfait à une condition prédéfinie d'une caractéristique de pixel dans l'image d'empreinte digitale comme étant un pore de sueur ;
dans lequel la condition prédéfinie comporte un niveau d'échelle de gris étant supérieur à un seuil d'échelle de gris prédéfini et une taille étant inférieure à un seuil de taille prédéfini.

11. Programme informatique qui, lorsqu'il est exécuté sur un processeur (620) d'un appareil (600) pour détecter une pression, met en œuvre le procédé selon l'une quelconque des revendications 1 à 5.

12. Dispositif de stockage lisible par ordinateur sur lequel est stocké un programme informatique selon la revendication 11.
